Europäisches Patentamt

European Patent Office

Office européen des brevets

(11) Numéro de publication: **0 059 673**
**B1**

(12) **FASCICULE DE BREVET EUROPEEN**

(45) Date de publication du fascicule du brevet: **19.06.85**

(21) Numéro de dépôt: **82400354.5**

(22) Date de dépôt: **02.03.82**

(51) Int. Cl.⁴: **B 64 G 1/44**

(54) **Dispositif de libération mécanique appliqué au déploiement de panneaux solaires de satellites.**

(30) Priorité: **03.03.81 FR 8104195**

(43) Date de publication de la demande:
**08.09.82 Bulletin 82/36**

(45) Mention de la délivrance du brevet:
**19.06.85 Bulletin 85/25**

(84) Etats contractants désignés:
**BE CH DE GB IT LI NL SE**

(56) Documents cités:
**US-A-2 495 341**
**US-A-3 677 508**

(73) Titulaire: **SOCIETE NATIONALE INDUSTRIELLE AEROSPATIALE**
**37 boulevard de Montmorency**
**F-75016 Paris Cedex 16 (FR)**

(72) Inventeur: **Chenin, Claude**
**37 Avenue Francis Tubi**
**F-06150 Cannes La Bocca (FR)**
Inventeur: **Krawczyk, Rodolphe**
**Résidence Le Negrin 16, Boulevard Louis Negrin**
**F-06150 Cannes La Bocca (FR)**
Inventeur: **Marello, Georges**
**520, rue Janvier Pasero**
**F-06210 Mandelieu (FR)**
Inventeur: **Lombard, Yves J.**
**Chemin St Joseph Les Pins Parasols Bâtiment 5**
**F-06110 Le Cannet (FR)**

(74) Mandataire: **Rinuy, Guy et al**
**Cabinet Rinuy et Santarelli 14, Avenue de la Grande Armée**
**F-75017 Paris (FR)**

Courier Press, Leamington Spa, England.

EP 0 059 673 B1

## Description

La présente invention a trait aux dispositifs mécaniques utilisés sur un satellite.

Elle concerne plus spécialement la libération mécanique d'un élément par rapport à un autre dans une ambiance spatiale de vide et de températures.

Elle s'applique tout particulièrement à l'ouverture des conteneurs de panneaux solaires après mise en orbite du satellite porteur.

On connaît bien différents dispositifs assurant une fonction équivalente notamment à partir de cliquets et de cames.

Dans une telle solution, un conteneur pour générateur solaire de satellite dans une conformation de boîte à couvercle et charnière, porte des cliquets côté boîte et des cames côté couvercle et le basculement des cames, sous une action quelconque, produit le déplacement des cliquets libérant ainsi le couvercle qui s'ouvre alors autour de la charnière sous l'effet d'un mécanisme approprié.

Un tel dispositif présente l'inconvénient majeur de ne transmettre que des flux de cisaillement très faibles souvent incompatibles avec les contraintes imposées dans certaines phases de la mise en place d'un satellite.

Une autre solution pyrotechnique présente l'inconvénient de produire un choc au moment de la libération du couvercle.

Une troisième solution à broche coulissante présente des risques de coincement par suite des déformations résiduelles du conteneur et possède en tout cas, une masse rédhibitoire pour une utilisation spatiale.

La présente invention ne possède aucun des inconvénients cités.

L'invention a pour objet principal de relier temporairement deux éléments structuraux lorsque la liaison est soumise entre autre à des flux de cisaillement importants. Pour des raison évidentes d'allègement, il est important de répartir le flux de cisaillement de la manière la plus continue possible. Dans l'application selon l'invention, qui concerne la liaison d'un conteneur avec son couvercle, ledit conteneur se trouve partiellement en porte-à-faux. Il s'ensuit que les sollicitations mécaniques et dynamiques, auxquelles il est soumis, créent des moments de flexion et donc des flux de cisaillement importants entre les parois du conteneur et son couvercle.

D'autre part, la liaison entre le conteneur et son couvercle peut être soumise à des contraintes de traction par suite des efforts produits par une vessie disposée à l'intérieur dudit conteneur et destinée à maintenir en place les éléments mécaniques qui y sont disposés malgré les sollicitations que l'ensemble doit supporter principalement pendant la phase de lancement.

Dans une tell application, les éléments mécaniques, cités ci-dessus, sont des éléments constitutifs d'un panneau solaire destiné à un satellite.

Enfin, la liaison doit aussi transmettre un flux normal à ladite liaison: pour qu'il ne se produise pas de délaminage dû à cette sollicitation, il est prévu un encastrement mécanique qui sera décrit par la suite.

La solution proposée permet d'assurer successivement:

— dans un premier temps: le transfert de flux de cisaillement élevé et des efforts de traction explicités ci-dessus, qui de produisent entre le conteneur et son couvercle,
— dans un deuxième temps: la libération mécanique d'un côté du couvercle, l'autre bord dudit couvercle restant relié au conteneur par une charnière répartie sur toute sa longueur.

La présente invention vise un dispositif de libération mécanique, appliqué au déploiement de panneaux solaires de satellites, caractérisé en ce qu'il comporte:

— un conteneur de panneaux solaires lié au satellite et portant d'un côté une charnière et de l'autre côté au moins un élément liant en bordure extérieure;
— un couvercle articulé d'un côté sur ladite charnière et portant de l'autre côté au moins un élément liant en bordure extérieure;
— une pluralité d'éléments flexibles de jonction appliqués sur l'élément liant:
— un élément de coordination de toutes les extrémités non appliquées des éléments flexibles et de soulèvement progressif automatique de ces éléments, sous l'action d'un mécanisme moteur; chaque élément flexible étant appliqué partiellement sur l'élément liant, son extrémité non appliquée étant en liaison avec l'élément de coordination qui est rattaché selon l'une de des extrémités au mécanisme moteur lié au conteneur et, selon son autre extrémité à une autre partie du conteneur, tandis qu'un coupe-élément électrique est disposé près de cette dernière extrémité; l'agencement de ces éléments étant tel que la mise en action du coupe-élément de coordination produit, dès coupure de l'élément de coordination, le pelage simultané de tous les éléments liants entraînant ainsi la libération mécanique du couvercle et de son conteneur dès détachement des éléments flexibles.

L'organe moteur peut être un ressor, un moteur électrique etc. L'élément de coordination peut être un câble, un ruban ou tout autre dispositif équivalent. Avec un ressort, l'ordre de fonctionnement peut être effectué par un coupe-câble qui sectionne l'extrémité de l'élément de coordination à proximité de son point d'ancrage.

Le câble peut être remplacé avantageusement, dans certains cas, par un ruban métallique.

La libération mécanique consistent à séparer l'élément flexible, peut encore être effectuée en faisant glisser un rouleau métallique sous l'extrémité relevée dudit élément. L'expérience a montré que l'effort à fournir est sensiblement le double de celui nécessaire avec le première solution mais comme le course de l'organe moteur est alors réduite de moitié, on constate qui le pelage est produit au moyen d'une énergie sensiblement identique. L'élément qui provoque le pelage (coin ou rouleau) est tiré par l'élément de coordination mais par l'intermédiaire d'un étrier.

Cet disposition présente l'avantage d'être moins sensible aux vibrations du câble de coordination.

Le produit de liaison, ou élément liant, doit être choisi de manière à ce qu'il assure une bonne tenue au cisaillement, puisque tous les efforts que la liaison subit, sont transmis à l'élément flexible par des contraintes de cette nature. L'élément liant doit aussi avoir un bon comportement aux températures extrêmes telles que celles rencontrées en ambiance spatiale, une bonne stabilité dans le temps et présenter le minimum de dégazage pour éviter la pollution des éléments optiques situés à proximité (par exemple les cellules solaires). L'élément liant doit aussi présenter des qualités de pelabilité vis à vis soit de l'élément flexible, soit des plaques du conteneur et de son convercle. Ces qualités sont fonction des matériaux et de leur état de surface. Des essais concluants ont été effectués avec des plaques cupriques, un élément flexible en cupro-béryllium et une soudure à base d'étain.

Plusieurs sortes de liaisons sont possibles suivant l'importance du flux de cisaillement à transmettre. On peut envisager:

— liaisons avec coulissement genre "fermeture éclair"
— liaisons genre "Velcro"®
— colles
— soudures ou brasures
— éléments magnétiques...

et plus généralement tous moyens d'adhésion de type connu.

Lorsque les flux ne sont pas très élevés, on peut prévoir une continuité de quelques dizaines de %, ce qui permet de disposer un guide-câble entre chaque liaison, pour limiter les élongations de battement du câble qui pourraient provoquer prématurément un début de pelage.

Lorsque les flux de cisaillement des liaisons sont élevés, il est nécessaire d'assurer une continuité qui peut avoisiner 100%. On est alors conduit à modifier le système de coordination de manière à accroître la tension du câble, étant donné qu'il n'est alors plus possible de disposer des guides-câbles. Cet arrangement qui permet d'augmenter la fréquence de battement du câble et de diminuer son élongation peut être constitué par un câble avec tendeur passant sur deux poulies situées aux extrémités du dispositif, auquel sont associés le ressort de tension et le coupe-câble qui permet le fonctionnement du dispositif de libération. On peut également y associer une gouttière servant de guidage.

La présente invention répond aux impératifs correspondant à certains types d'application que les autres solutions ne peuvent satisfaire sans de profondes modifications qui conduisent alors à des masses prohibitives.

L'invention va de toutes manière être bien comprise dans la suite du texte qui va montrer, à l'appui des dessins annexés, quelques modes de réalisation préférés de l'invention applicables au domaine spatial et montrés à titre d'exemple.

Sur les dessins:

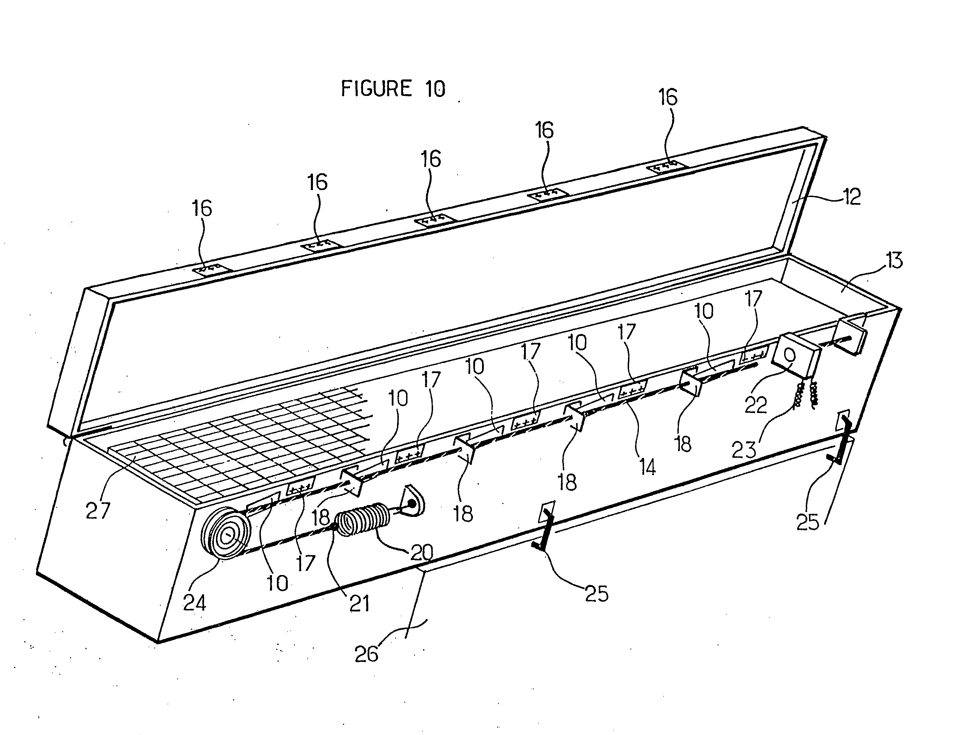

la figure 10 est un vue schématique en perspective montrant un dispositif de conteneur d'ouverture de type connu;
les figures 2 et 3 sont des vues en coupe selon I—I de la figure 1 du dispositif en positions verrouillée et déverrouillée;
la figure 4 est une vue en perspective montrant le principe de base de fonctionnement du dispositif selon l'invention;
la figure 5 est une vue en coupe selon V—V de la figure 4;
la figure 6 est une vue schématique en coupe longitudinale montrant l'application de l'invention sur un conteneur, avant mise en fonctionnement du dispositif;
la figure 7 est une vue schématique en coupe montrant l'application de l'invention sur le même conteneur après fonctionnement du même dispositif;
la figure 8 est une vue en perspective montrant l'implantation réelle du dispositif sur un conteneur lié au corps d'un satellite;
la figure 9 est une vue en coupe selon IX—IX de la figure 8 pratiquée sur le conteneur;
la figure 10 est une vue en perspective montrant le conteneur après ouverture du couvercle mais avant déploiement des panneaux solaires;
la figure 11 est une variante de la figure 8 selon laquelle le taux de recouvrement du dispositif pelable est plus important.
la figure 12 est un vue en coupe de la jonction de couvercle avec son conteneur et présentant une gouttière de protection;
la figure 13 est un vue en perspective partielle montrant une variante de mise en oeuvre du dispositif selon l'invention avant sa mise en fonction;
la figure 14 est une vue en perspective partielle montrant le dispositif selon la figure 13 en début de fonctionnement.

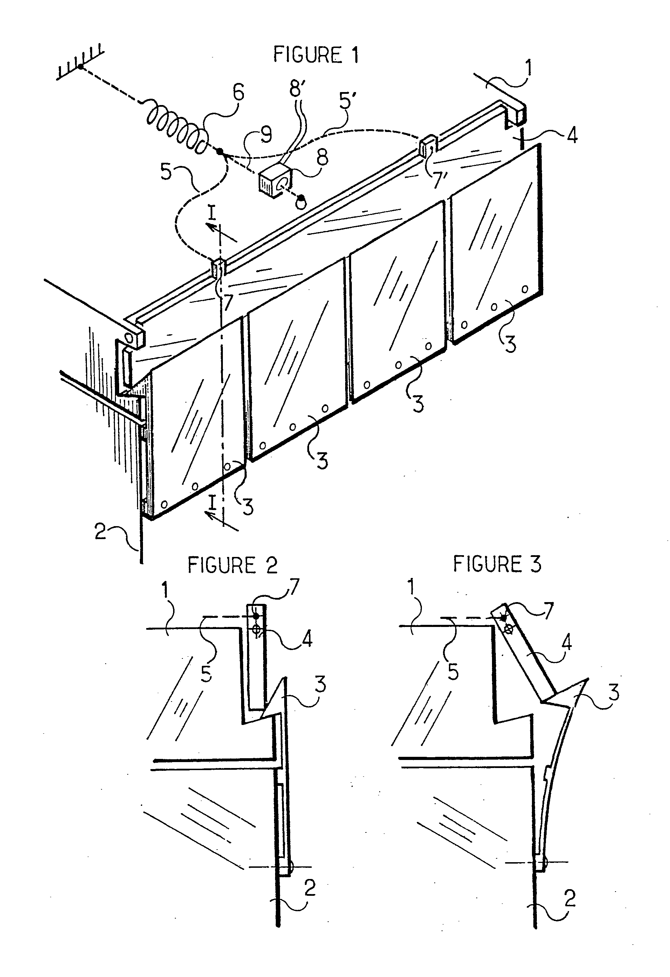

Selon l'art antérieur connu un conteneur pour générateur solaire est décrit ci-après en référence aux figures 1, 2 et 3. Dans cette solution, le couvercle 1 du conteneur 2 est maintenu en position fermée par une série de cliquets 3. Le déclenchement de l'ouverture est produit par une came 4 disposée tout le long de la liaison, ce qui permet l'écartement simultané de tous les encliquetages par une rotation de ladite came. Celle-ci est actionnée par un ressort 6 qui produit une traction sur deux câbles 5 et 5', lesquels tirent sur deux leviers 7 et 7' solidaires de ladite came 4. L'ordre de commande électrique en 8' agit sur un coupe-câble 8 qui sectionne un câble de retenue 9, tendu par le ressort 6. Il faut noter, que la répartition des points de fixation du conteneur est telle qu'il n'y a pratiquement aucun flux de cisaillement transmis entre ledit conteneur et con couvercle, et qu'il suffit de quelques pions de positionnement.

Comme cela a été relaté ci-dessus, il est évident de constater qu'une telle solution est inadaptée au passage de flux de cisaillement important en raison du fait du non assujettissement longitudinal du couvercle au reste du conteneur.

Dans la solution proposée par l'invention non seulement les flux transmis peuvent être importants mais la mise en oeuvre de la libération du couvercle du conteneur est considérablement simplifiée ne serait-ce que par l'absence de mécanismes pivotants pouvant gripper ou par l'élimination de parties travaillant en flexion, tels que les cliquets de verrouillage.

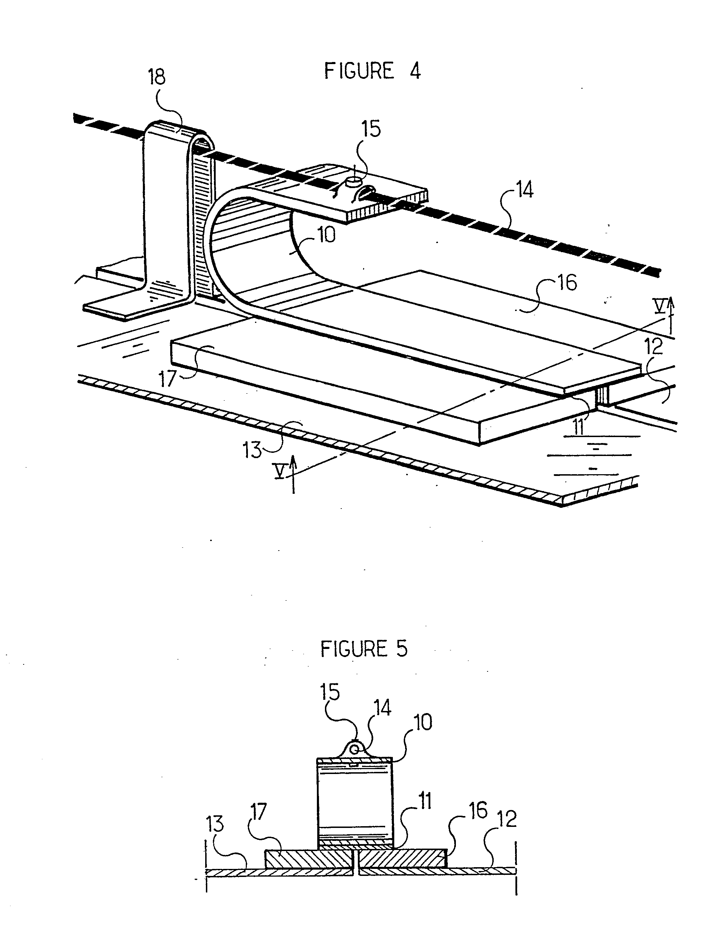

Si l'on se reporte maintenant aux figures 4 et 5 on peut voir que le principe de base du dispositif selon l'invention est essentiellement mis en oeuvre à partir d'une lame ou élément flexible 10 lié par un moyen d'adhésion ou élément liant 11 disposé d'une part en bordure de partie 16 et d'autre part, en bordure de la partie repérée 17 sur ladite figure, tandis qu'un câble 14 lié en 15 à la lame 10 assure le mouvement mécanique du pelage proprement dit.

L'assemblage de la lame flexible 10 avec les éléments intermédiaires spéciaux ou plaques 16 et 17 est réalisé à part.

Ces ensembles sont ensuite rapportés rigidement contre les éléments 12 et 13 de la structure proprement dite.

Par ailleurs, un étrier guide-câble 18 peut également être prévu en complément.

Dans l'application spatiale envisagée, la lame flexible 10 est de préférence en cupro-béryllium, les plaques 16—17 fixées aux parties 12 et 13 sont un alliage de cuivre tandis que le produit de liaison 11 mis en oeuvre est à base d'étain et le câble 14 est en acier.

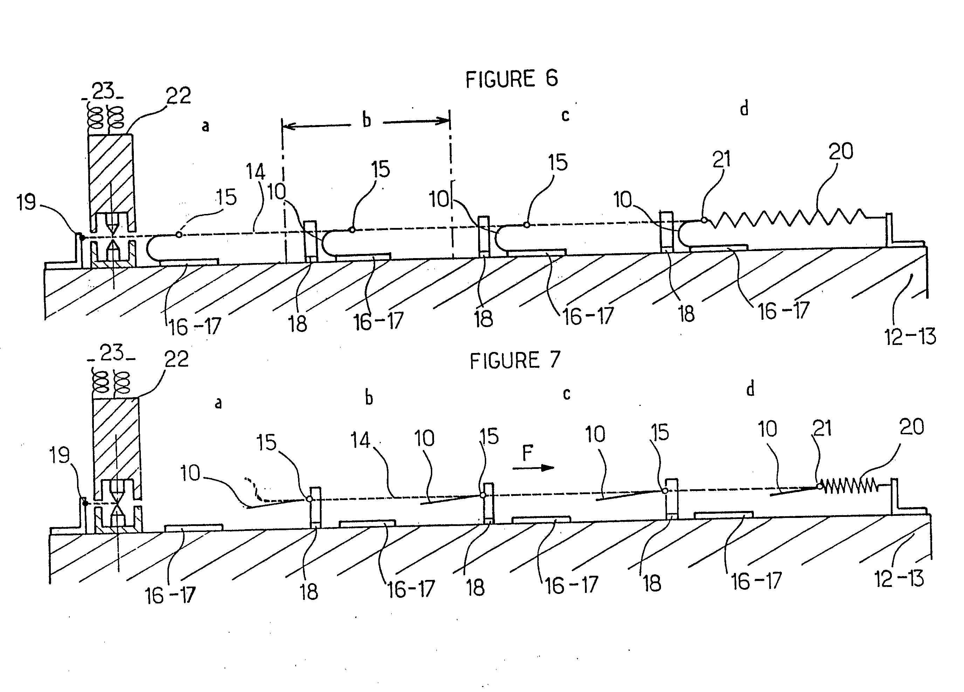

Sur les figures 6 et 7, il est montré maintenant schématiquement comment le dispositif élémentaire selon les figures 4 et 5, est mis en oeuvre dans sa totalité (la figure 4 est représentative du tronçon b de la figure 6). Selon ces figures, le câble 14 est attaché d'une part par son extrémité 19 à un point solidaire du conteneur 13 et d'autre part par son extrémité 21 à un ressort 20 lui-même rattaché par une des ses extrémités au conteneur 13.

Un coupe-câble 22 commandé électriquement à partir des fils 23 assure la section du câble 14 ce qui déclenche l'ouverture du conteneur.

Au moment du sectionnement du câble 14, l'action du ressort 20 agit sur le câble 14 dans le sens de la flèche F produisant de la sorte par action sur les lames flexibles 10, un pelage du liant 11 libérant ainsi les éléments 12 et 13 comme cela est représenté sur la figure 7.

Il est à noter que le câble reste maintenu par les guides-câbles 18 de telle sorte que dans l'étant d'apesanteur, aucun élément ne peut s'loigner et venir perturber le fonctionnement du reste du satellite.

Les tronçons a, b, c, d représentés sur les figures 6 et 7 peuvent intéresser une certaine zone de la liaison entre 12 et 13.

Cette configuration s'applique lorsque la couverture est inférieure à 50% car il faut disposer d'un espace suffisant pour être sûr de peler toute la longueur de la barre. Les tronçons peuvent être alors relativement espacés.

Lorsque la liaison doit être continue approchant alors 100%, la couverture peut être assurée comme cela sera exposé par la suite.

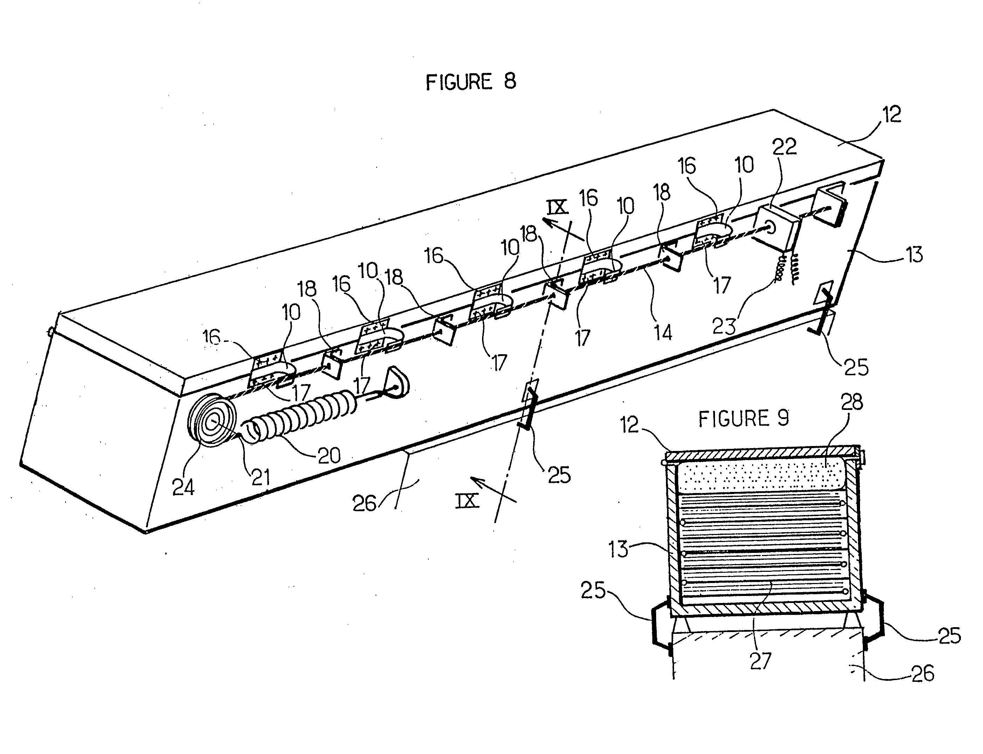

Les figures 8, 9 et 10 montrent maintenant l'application spatiale qui est faite du dispositif selon l'invention pour libérer sur un satellite un panneau solaire relié en accordéon.

Sur la figure 8, on retrouve les éléments essentiels des figures 4, 6 et 7, mais dans une configuration d'utilisation pratique sur un satellite. Pour des raisons de répartition des liaisons entre le conteneur et son couvercle, le ressort 20 est situé en dessous de la partie active du câble 14 sur lequel il agit par l'intermédiaire d'une poulie de renvoi 24.

D'autre part, le conteneur 13 est relié au satellite 26 par des pattes 25.

La figure 9 montre le générateur solaire replié 27 et la vessie 28 de maintien en place dudit générateur en configuration non déployée.

La figure 10 montre maintenant l'ensemble du conteneur selon figure 8 après ouverture. On y voit que le coupe-câble 2 a fonctionné: le câble est sectionné et s'est déplacé sous l'effet du ressort 20 dont l'étirement a diminué. Les lames 10 ont été arrachées des plaques par pelage du liant, mais restent solidaires du câble 14 qui est maintenu par les guides-câbles 18. La liaison entre les plaques étant enlevée, le couvercle 12 est ouvert sous l'effet d'un dispositif d'ouverture, actionné par un ressort régulé hydrauliquement (non représenté) et ayant un point fixe sur le conteneur 13. La vessie 28 est vidée avant cette phase de fonctionnement.

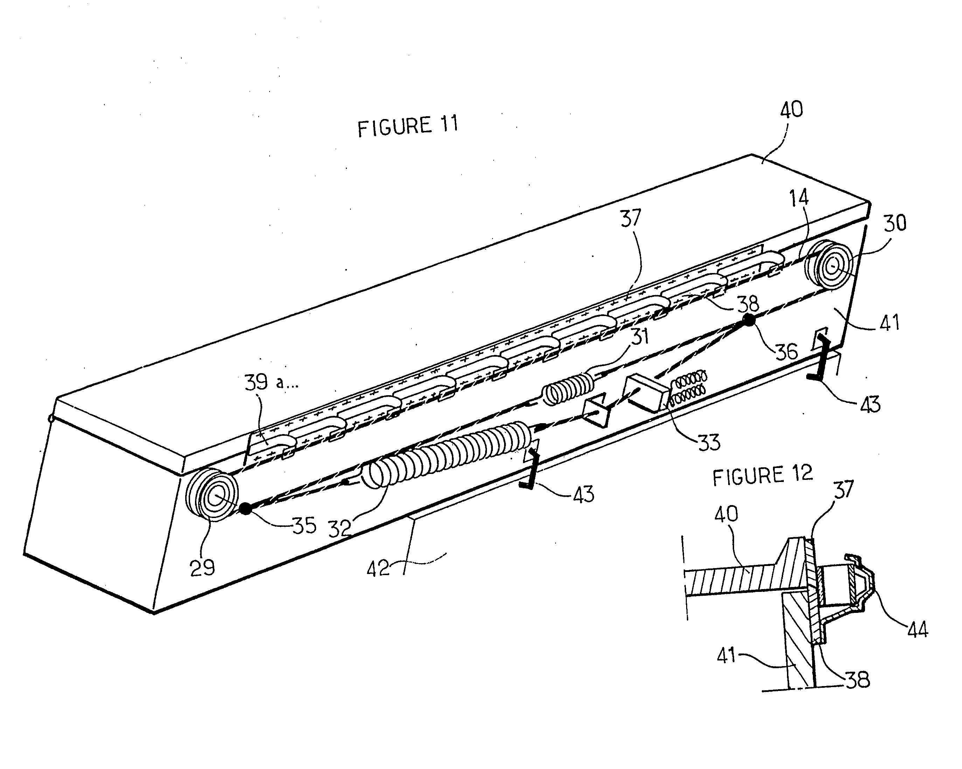

La figure 11 montre en variante l'ensemble d'un conteneur ayant une continuité de fermeture voisine de 100%. On remarque qu'il n'y a plus de guide-câble, que le câble 34 est monté sur deux poulies 29 et 30 et que le câble est tendu par un ressort 31, lui donnant une fréquence de résonance élevée. Ceci permet d'obtenir des élongations à la résonance compatibles avec le risque d'amorces de pelage. Sur cet ensemble, on retrouve un ressort de traction 32 et un coupe-câble 33 qui initie le fonctionnement du dispositif. La liaison avec le câble 14 s'effectuant aux points 35 et 36.

La continuité de fermeture est obtenue par le fait que les plaques 37 et 38 sont maintenant continues et que les lames flexibles 39a, 39b . . . produisent la quasi totalité de la couverture adhésive entre le couvercle 40 et le conteneur

assujetti par ailleurs au corps du satellite 42 par les supports 43.

Il peut être prévu en complément une gouttière de protection 44 comme cela ressort de l'examen de la coupe selon figure 12. Une telle gouttière sert notamment de guide pour limiter les débattements du câble lorsqu'il subit des vibrations en empêchant ainsi un début de pelage accidentel.

On remarquera sur cette figure la coupe biaise des plaques 37 et 38 réalisée de manière à ce que l'extrémité de la plaque 38 soit encastrée entre la plaque 37 et le couvercle 40. Cette disposition permet la transmission mécanique des efforts qui se produisent dans un plan parallèle à celui du couvercle. On évite ainsi le risque de pelage dû à ce genre de contraintes de cisaillement.

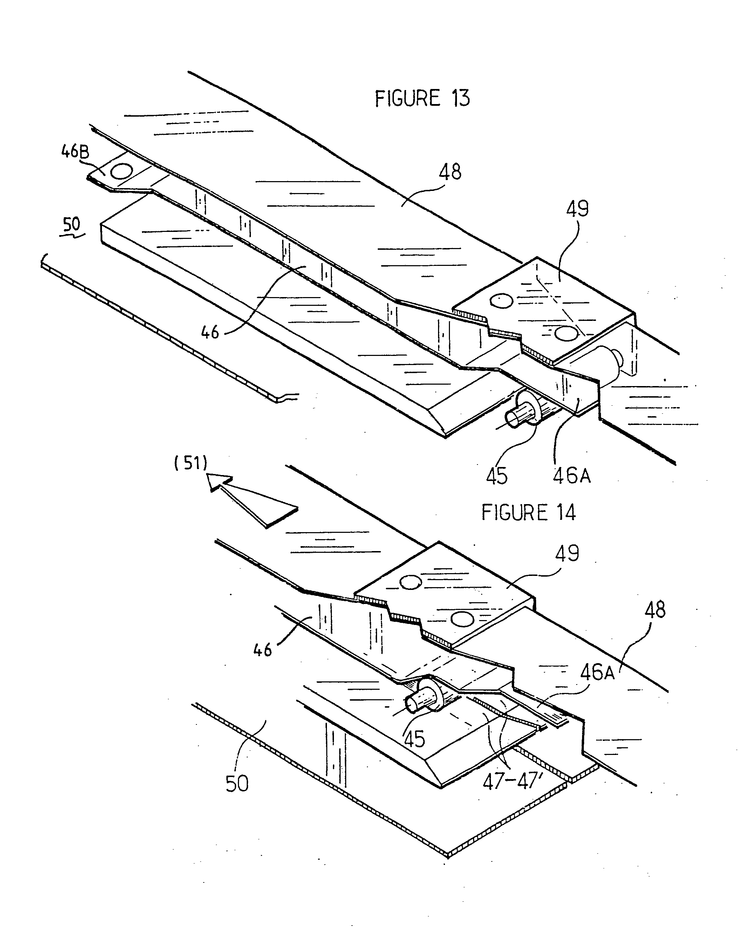

Les figures 13 et 14 montrent à titre de variante, une solution de pelage produit par un rouleau 45 qui sépare l'élément flexible 46 des éléments liants 47 et 47'.

Dans un tel cas, le câble remplacé par un élément plat 48 tendu par un ressort 51 qui porte le galet 45 par un étrier 49 et qui déplace ce galet depuis la configuration de la figure 13 (repos) sur toute la longueur de l'élément flexible 46 depuis une languette 46A de cet élément. L'autre extrémite 46B de la lame est rendue solidaire de la partie du conteneur 50 voisine de la jonction pour la maintenir en fin de course.

La nature des matériaux constituant les éléments flexibles ainsi que les bordures de réception de l'élément liant, peut être de tout genre convenable ou en alliage ou encore sous forme de revêtement rapporte électrolytiquement.

**Revendications**

1. Dispositif de libération mécanique, appliqué au déploiement de panneaux solaires de satellites, caractérisé en ce qu'il comporte:

— un conteneur (13) de panneaux solaires (27) lié au satellite (26—42) et portant d'un côté une charnière et de l'autre côté au moins un élément liant (11) en bordure extérieure;
— un couvercle (12) articulé d'un côté sur ladite charnière et portant de l'autre côté au moins un élément liant en bordure extérieure;
— une pluralité d'éléments flexibles (10—46) de jonction appliqués sur l'élément liant;
— un élément (14—48) de coordination de toutes les extrémités non appliquées des éléments flexibles (10) et de soulèvement progressif automatique de ces éléments sous l'action d'un mécanisme moteur (20—32—51); chaque élément flexible (10) étant appliqué partiellement sur l'élément liant (11), son extrémité non appliquée étant an liaison avec l'élément (14—18) de coordination qui est rattaché selon l'une de ses extrémités (21) au mécanisme moteur (20—32—51) lié au conteneur (13) et, selon son autre extrémité (19) à une autre partie (19) du conteneur, tandis qu'un coupe-élément (14—48) électrique (22) est disposé près de cette dernière extrémité; l'agencement de ces éléments étant tel que la mise en action du coupe-élément produit, dès coupure de l'élément (14—48) de coordination, le pelage simultané de tous les éléments liants (11) entraînant ainsi la libération mécanique du couvercle (12) et de son conteneur (13) dès détachement des éléments flexibles (10).

2. Dispositif de libération mécanique, appliqué au déploiement de panneaux solaires de satellites selon la revendication 1 caractérisé en ce que l'élément de soulèvement progressif automatique est un câble (14) a deux extrémités (19, 21).

3. Dispositif de libération mécanique appliqué au déploiement de panneaux solaires de satellite selon la revendication 1 caractérisé en ce que le conteneur (13) est lié au satellite par des pattes d'attache (25—43).

4. Dispositif de libération mécanique appliqué au déploiement de panneaux solaires de satellite selon les revendications 1 et 2 caractérisé en ce qu'une pluralité de guide-câbles (18) assure le maintien du câble après sa rupture.

5. Dispositif de libération mécanique appliqué au déploiement de panneaux solaires de satellite selon la revendication 1 caractérisé en ce que l'élément liant (11) est d'une seule longueur et les éléments flexibles (10) sont disposés à la suite les uns de autres, le taux de recouvrement étant sensiblement de 100%.

6. Dispositif de libération mécanique appliqué au déploiement de panneaux solaires de satellite selon la revendication 1 caractérisé en ce que les panneaux solaires (27) sont repliés au repos dans le conteneur (13) et une vessie (28) en assure le maintien mécanique avant déploiement.

7. Dispositif de libération mécanique appliqué au déploiement de panneaux solaires de satellite selon les revendications 1, 2 et 4 caractérisé en ce qu'un ressort (31) assure une tension supplémentaire sur le câble de liaison (14), ce dernier étant guidé par deux poulies de renvoi (29—30).

8. Dispositif de libération mécanique appliqué au déploiement de panneaux solaires de satellite selon l'une quelconque des revendications 1, 2, 4 et 7 caractérisé en ce qu'une gouttière de protection (44) assure la protection et le maintien du câble.

9. Dispositif de libération mécanique appliqué au déploiement de panneaux solaires de satellite selon la revendication 1 caractérisé en ce que l'élément flexible (46) présente une languette (46A) et l'élément de soulèvement progressif automatique est un élément plat (48) tendu par un ressort (51) et portant un galet roulant (45) mis en action par le sectionnement dudit élément plat, ledit galet (45) de déplaçant sous l'élément (46) depuis sa languette (46A).

**Patentansprüche**

1. Mechanische Auslösevorrichtung zur Entfaltung von Sonnenpaneelen eines Satelliten, gekennzeichnet durch

einen mit dem Satelliten (26, 42) verbundenen Behälter (13) für Sonnenpaneele (27), der auf einer Seite ein Gelenk und auf der anderen Seite zumindest ein Verbindungselement (11) am äußeren Rand trägt,

einen Deckel (12), der an einer Seite am Gelenk befestigt ist und der auf der anderen Seite zumindest ein Verbindungselement am äußeren Rand trägt,

eine Vielzahl von flexiblen Elementen (10, 46) zur Verbindung, die am Verbindungselement befestigt sind,

ein Element (14, 48) zur Koordination aller nicht befestigten Enden der flexiblen Elemente (10) und zum fortschreitenden, automatischen Abheben dieser Elemente unter der Wirkung eines Antriebsmechanismus (20, 32, 51), wobei jedes flexible Element (10), das teilweise am Verbindungselement (11) befestigt ist, mit seinem nicht befestigten Ende mit dem Koordinationselement (14, 48) verbunden ist, das mit einem seiner Enden (21) am Antriebsmechanismus (20, 32, 51), der mit dem Behälter (13) verbunden ist, und mit seinem anderen Ende (19) an einem anderen Teil (19) des Behälters angeknüpft ist, während ein elektrisches Schneidelement (22) nahe an diesem letzteren Ende angordnet ist, und

wobei die Anordnung dieser Elemente derart ist, daß das Inbetriebsetzen des Schneidelements das simulatane Abziehen von allen Verbindungselementen (11) vom Abtrennen des Koordinationselements (14, 48) an erzeugt, wodurch die mechanische Auslösung des Deckels (12) von seinem Behälter (13) vom Loslösen der flexiblen Elemente an bewirkt wird.

2. Mechanische Auslösevorrichtung zur Entfaltung von Sonnenpaneelen eines Satelliten nach Anspruch 1, dadurch gekennzeichnet, daß das Element zum fortschreitenden automatischen Abheben ein Seil (14) mit zwei Enden (19, 21) ist.

3. Mechanische Auslösevorrichtung zur Enrfaltung von Sonnenpaneelen eines Satelliten nach Anspruch 1, dadurch gekennzeichnet, daß der Behälter (13) durch Befestigungsklammern (25, 43) mit dem Satelliten verbunden ist.

4. Mechanische Auslösevorrichtung zur Enrfaltung von Sonnenpaneelen eines Satelliten nach Anspruch 1 oder 2, dadurch gekennzeichnet, daß eine Vielzahl von Seilführungen (18) die Halterung des Seils nach seinem Bruch sicherstellt.

5. Mechanische Auslösevorrichtung zur Entfaltung von Sonnenpaneelen eines Satelliten nach Anspruch 1, dadurch gekennzeichnet, daß das Verbindungselement (11) von einer einzelnen Länge ist und die flexiblen Elemente (10) in einer Folge hintereinander angeordnet sind, wobei der Prozentsatz der Überdeckung im wesentlichen 100% ist.

6. Mechanische Auslöservorrichtung zur Entfaltung von Sonnenpaneelen eines Satelliten nach Anspruch 1, dadurch gekennzeichnet, daß die Sonnenpaneele (27) in Ruhe im Behälter (13) zusammengefaltet sind und eine Blase (28) die mechanische Halterung vor der Entfaltung sichert.

7. Mechanische Auslösevorrichtung zur Entfaltung von Sonnenpaneelen eines Satelliten nach Ansprüche 1, 2 und 4, dadurch gekennzkichnet, daß eine Feder (31) eine Hilfsspannung auf dem Verbindungskabel (14) sicherstellt, das durch zwei Umlenkrollen (29, 30) geführt ist.

8. Mechanische Auslösevorrichtung zur Entfaltung von Sonnenpaneelen eines Satelliten nach Ansprüche 1, 2, 4 und 7, dadurch gekennzeichnet, daß ein Schutzrinne (44) den Schutz und die Halterung des Seils sicherstellt.

9. Mechanische Auslösevorrichtung zur Entfaltung von Sonnenpaneelen eines Satelliten nach Anspruch 1, dadurch gekennzeichnet, daß das flexible Element (46) eine Zunge (46a) aufweist und daß das Element zum fortschreitenden automatischen Abheben ein von einer Feder (51) gespanntes und eine Rolle (45) tragendes flaches Element (48) ist, das durch eine Trennung dieses flachen Elements in Betrieb gesetzt wird, wobei die Rolle (45) sich von der Zunge (46a) an unter das Element (46) schiebt.

**Claims**

1. A mechanical release device applied to the spreading out of satellite solar panels, characterized in that it comprises:

— a container (13) of solar panels (27) connected to the satellite (26—42) and carrying out on the one side hinge means and on the other side at least one binding element (11) at the outer edge portion;
— a cover (12) hinged to one side onto said hinge means and carrying on the other side at least one binding element at the outer edge portion;
— a plurality of flexible junction elements (10—46) applied to the binding element;
— an element (14—48) for coordination of all the unapplied ends of the flexible elements (10) and for automatic progressive lifting of such elements, under the action of a motive mechanism (20—32—51); each flexible element (10) being applied partly onto the binding element (11), with its unapplied ends being connected to the coordination element (14—48) which is attached at one end (21) to the motive mechanism (20—32—51) connected to the container (13) and at its other end (19) to another part (19) of the container, whereas an electric element (14—48) cutting means (22) is disposed adjacent to this latter end; the arrangement of such elements being so that the actuation of the element cutting means causes, as soon as the element (14—48) is cut, simultaneous peeling off of all the binding elements (11) thereby resulting in mechanical release of the cover (12) and of its container (13) as soon as the flexible elements (10) are removed therefrom.

2. A mechanical release device applied to the spreading out of satellite solar panels, characterized in that the automatic progressive lifting element is a cable (14) with two ends (19—21).

3. A mechanical release device applied to the spreading out of satellite solar panels according to claim 1, characterized in that the container (13) is connected to the satellite by attachment lugs (25—43).

4. A mechanical release device applied to the spreading out of satellite solar panels according to claims 1 and 2, characterized in that a plurality of cable guide means (18) enables the cables to be maintained after breakage thereof.

5. A mechanical release device applied to the spreading out of satellite solar panels according to claim 1, characterized in that the binding element (11) is of a single length and the flexible elements (10) are disposed one after the other, with the overlapping rate being substantially 100%.

6. A mechanical release device applied to the spreading out of satellite solar panels according to claim 1, characterized in that the solar panels (27) are folded up into the container (13) in the resting position and a bladder (28) provides for mechanical holding thereof before spreading out.

7. A mechanical release device applied to the spreading out of satellite solar panels according to claims 1, 2 and 4, characterized in that a spring (31) produces supplementary tension upon the connecting cable (14), the latter being guided by two return pulleys (29—30).

8. A mechanical release device applied to the spreading out of satellite solar panels according to any one of claims 1, 2, 4 and 7, characterized in that a protective trough (44) provides for protection and holding down of the cable.

9. A mechanical release device applied to the spreading out of satellite solar panels according to claim 1, characterized in that the flexible element (46) presents a tongue (46A) and the automatic progressive lifting element is a flat element (48) stretched by a spring (51) and carrying a running roller (45) brought into action upon cutting off said flat element, said roller (45) moving under element (46) from the tongue (46A) thereof.

FIGURE 1

FIGURE 2

FIGURE 3

FIGURE 4

FIGURE 5

FIGURE 6

23  22  a  b  c  d

19  15  14  10  15  10  15  10  21  20

16-17  18  16-17  18  16-17  18  16-17  12-13

FIGURE 7

23  22  a  b  c  d

19  10  15  14  10  15  F  10  15  10  21  20

16-17  18  16-17  18  16-17  18  16-17  12-13

0 059 673

FIGURE 8

FIGURE 9

0 059 673

FIGURE 10

FIGURE 11

FIGURE 12

0 059 673

FIGURE 13

46B

50

46

48

49

45    46A

(51)

FIGURE 14

49

46

48

46A

50

45

47-47'